# EUROPEAN PATENT APPLICATION

(11) **EP 4 227 576 A1**
(43) Date of publication of application: **16.08.2023**
(21) Application number: 23155587.1
(22) Date of filing: 08.02.2023
(51) Int. Cl.: F21S 4/28, F21V 5/00, F21V 5/04, F21V 17/16, F21V 19/00, G02B 3/00, G02B 3/06, G02B 19/00, F21Y 115/10

(54) **A LENS, IN PARTICULAR A STRIP-SHAPED LENS, AND LAMP COMPRISING SUCH A LENS**

(30) Priority: 14.02.2022 CN 202210132862
(71) Applicant: Self Electronics Co., Ltd., Ningbo City, Zhejiang 315103 (CN); SELF ELECTRONICS Germany GmbH, 51149 Köln (DE); Lin, Wanjiong, Ningbo City, Zhejiang 315103 (CN)
(72) Inventor: XU, Kai, Ningbo, 315103 (CN); HE, Zuping, Ningbo, 315103 (CN); LIU, Xiaoyun, Ningbo, 315103 (CN)
(74) Representative: 2K Patentanwälte Blasberg Kewitz & Reichel

(57) **Abstract**

The present invention discloses a lens and a lamp, and relates to the technical field of lighting components. The lens includes a lens body and a cylindrical lens. One side of the lens body forms an incident surface, and the other side of the lens body forms the exit surface. A plurality of cylindrical lenses are provided on the incident side of the incident surface and form a continuously arranged structure. When light emitted by an LED light source is directed to the lens, the refractive path of the light can be changed through the cylindrical lenses, so that the light is favorably diffused and mixed, the color temperature of the light emitted from the lens is more uniform and the effect of yellow edges of conventional lenses is effectively eliminated. At the same time, since no light diffusing agent or abrasive material is added to the transparent plastic material of the lens, the light transmittance of the lens is not reduced.

## Description

This present application claims priority of Chinese patent application no. CN202210132862.4 filed on Feb. 14, 2022, the disclosures of which are incorporated herein by reference in its entirety.

### Field of Invention

The present invention relates to the technical field of lighting components, and in particular to a lens and a lamp. Here, both the lens and the lamp may be strip-shaped.

### Background of Invention

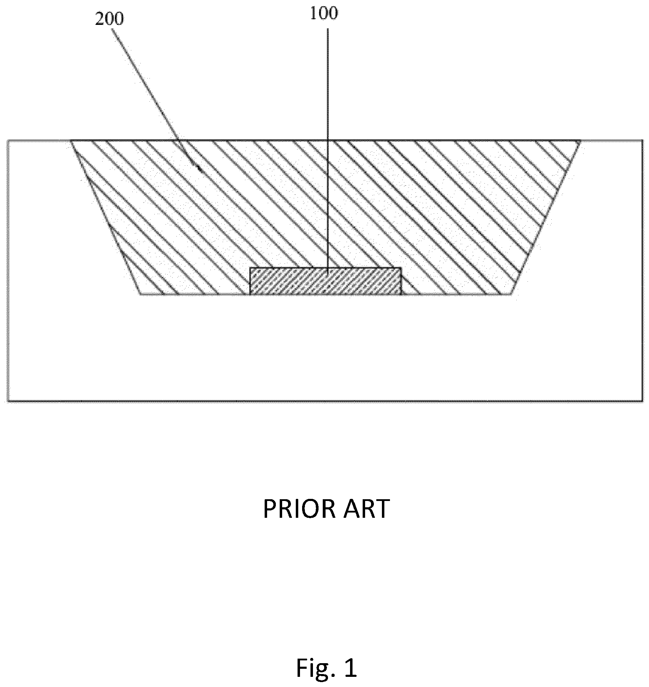

Nowadays, most of the lamps and lighting devices use LEDs as light sources. Early LEDs emitted only monochromatic light, most commonly red, green and blue light, and for a long time people were looking for ways for LEDs to emit white light, and later people have studied a scheme for obtaining white light by exciting a phosphor by blue light, said excited phosphor being capable of emitting yellow light, to thereby obtain white light. But in fact, the light obtained by exciting the phosphor with blue light and emitting yellow light is not a true "white light", but a mixture of blue and yellow light, which is difficult to distinguish by human eyes. As shown in Fig. 1, the light of the LED chip 100 according to the prior art passes through the different thicknesses of the packaging layer 200, resulting in different proportions of yellow and blue light in the middle region and two side regions. The proportion of yellow light on the two sides is relatively high, whereas it is low in the middle region.

As the lens on the lamp is usually made of transparent plastic, the refractive index of blue light is much higher than that of yellow light, and if used as a refractive lens medium to mage light emitted by an LED as outlined above, the blue light will be further projected more into the middle region, whereas the yellow light will be further refracted more to the edge of the lens medium to thereby form a yellow edge, which affects the light quality. In order to achieve the purpose of eliminating such yellow edges, there are technical solutions to add a light diffusing agent into a lens to diffuse the yellow light. Moreover, there exist other technical solutions to add a frosted material into a transparent lens to diffuse specifically the yellow light diffuse. However, all of the above technical solutions will lead to a reduction of the light transmission rate of the lens.

### Summary of Invention

The purpose of the present invention is to provide a lens and a lamp comprising such a lens, which can effectively eliminate yellow edges and ensure a relatively high light transmittance of the lens when imaging light emitted by an LED.

These problems are solved by a lens as claimed by claim 1, and by a lamp as claimed by claim 8. Further advantageous embodiments are the subject-matter of the dependent claims.

According to the present invention there is provided a lens, comprising a lens body, wherein an incident surface is formed on one side of the lens body and an exit surface is formed on the other (opposite) side of said lens body; and a plurality of cylindrical lenses arranged on the light incident side of the incident surface and forming a continuously arranged structure.

According to a further embodiment, the incident surface is provided with a concave surface.

According to a further embodiment, the plurality of cylindrical lenses are continuously arranged between the two opposite ends of the incident surface along the direction of an arc formed by said incident surface. More preferably, the plurality of cylindrical lenses are disposed at equidistant intervals along the direction of the arc formed by the incident surface

According to a further embodiment, the plurality of cylindrical lenses are each provided as an arc-shaped cylindrical structure.

According to a further embodiment, the lens body is in an integral structure with a plurality of said cylindrical lenses; and/or the lens body and the plurality of said cylindrical lenses are made of a transparent material.

According to a further embodiment, the exit surface is provided as a convex surface.

According to a further embodiment, the lens is integrally provided as a strip lens.

According to a further aspect of the present invention there is provided a lamp, comprising a lens as outlined above.

According to a further embodiment, the lamp further comprises an LED light-emitting module, said LED light-emitting module being arranged at the light entrance side of the lens.

According to a further embodiment, the lamp as a whole is configured as a strip lamp.

### Technical effects of the present invention

The present invention provides a lens and a lamp, in which a plurality of cylindrical lenses are provided in a continuous arrangement (at equidistant intervals relative to each other and directly adjacent to each other) on the light incidence side of the incident surface of the lens body. When the light emitted from the LED light source is directed to the lens, the refractive path of the light can be changed through the cylindrical lens, which facilitates the diffusion and mixing of light, so that the blue light and yellow light can be mixed better, which ultimately makes the color temperature of the light emitted from the lens more uniform and effectively eliminates the yellow edge. Since no light diffuser or abrasive material is added to the lens, the above settings do not lead to a reduction in the light transmission rate of the lens.

### Overview on drawings

Hereinafter, the invention will be disclosed with reference to the drawings and exemplary embodiments, from which further features, technical effects and problems to be solved will become apparent. In the drawings:
- Fig. 1: is a schematic cross-sectional view of a packaging of an LED chip according to the prior art;
- Fig. 2: is a schematic diagram of the overall structure of a lens provided by an embodiment of the present invention;
- Fig. 3: is a schematic diagram of the optical path of the lens provided by an embodiment of the present invention; and
- Fig. 4: is a schematic structural diagram of a lamp provided by an embodiment of the present invention.

Throughout the drawings, like reference numerals designated identical or substantially equivalent elements or groups of elements.

### Detailed description of preferred embodiments

In order to make the technical problems solved, the technical solutions adopted and the technical effects achieved by the present invention clearer, the technical solutions of the present invention are further described below in conjunction with the accompanying drawings and with reference to specific embodiments.

In the description of the present invention, unless otherwise expressly specified and limited, the terms "connected", and "fixed" are to be construed broadly, for example, they can related to fixed connections, or detachable connection, or an integral connection; it can mean a mechanical connection, or an electrical connection; it can be a direct connection, or an indirect connection through an intermediate medium, and it can be a connection within two components or any other relationship between two components. To a person of ordinary skill in the art, the specific meaning of the above terms in the context of the present invention can be understood on a case-by-case basis.

In the present invention, unless otherwise expressly specified and limited, a first feature being "above" or "below" a second feature may include direct contact between the first and second features, or it may include contact between the first and second features not directly but through a separate feature between them. The first and second features may be in direct contact with each other, or the first and second features may not be in direct contact with each other, but through another feature between them. Also, the first feature being "on", "above" and "over" the second feature may include the first feature being directly on and obliquely above the second feature, or simply indicate that the first feature is at a higher level than the second feature. A first feature being "under", "below" and "beneath" a second feature may include the first feature being directly under and obliquely below the second feature, or simply indicate that the first feature is at a level lower than the level of the second feature.

In the description of the present embodiment, the terms "upper", "lower", "left", "right", and the like are used based on the orientations and positional relationships shown in the drawings only for convenience of description and simplification of operation, and do not indicate or imply that the referred device or element must have a specific orientation, be configured and operated in a specific orientation, and thus, should not be construed as limiting the present invention. Furthermore, the terms "first" and "second" are used only for descriptive purposes and are not intended to have a special meaning.

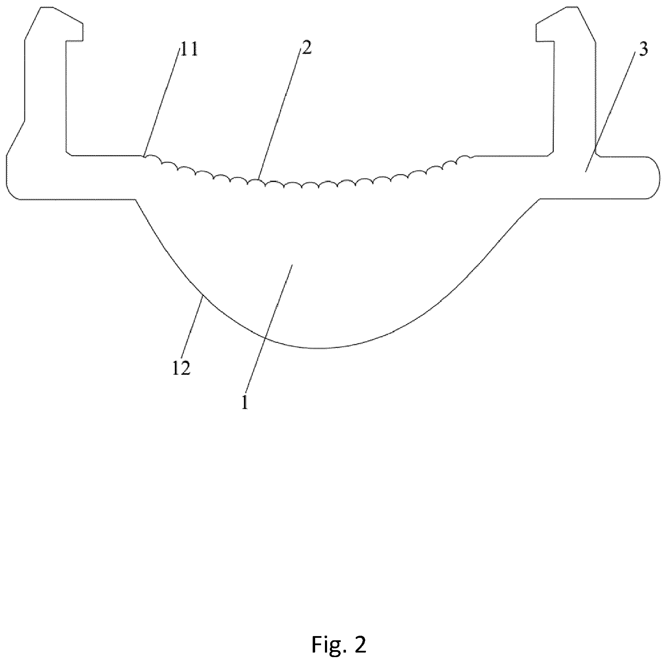

The present embodiment provides a lens, as shown in Fig. 2, comprising a lens body 1 and a plurality of cylindrical lenses 2, wherein an incident surface 11 is formed on a first side of the lens body 1 and an exit surface 12 is formed on the second side of the lens body 1 opposite to the first side. A plurality of cylindrical lenses 2 are provided on the light incident side of the incident surface 11 and form a continuous structure.

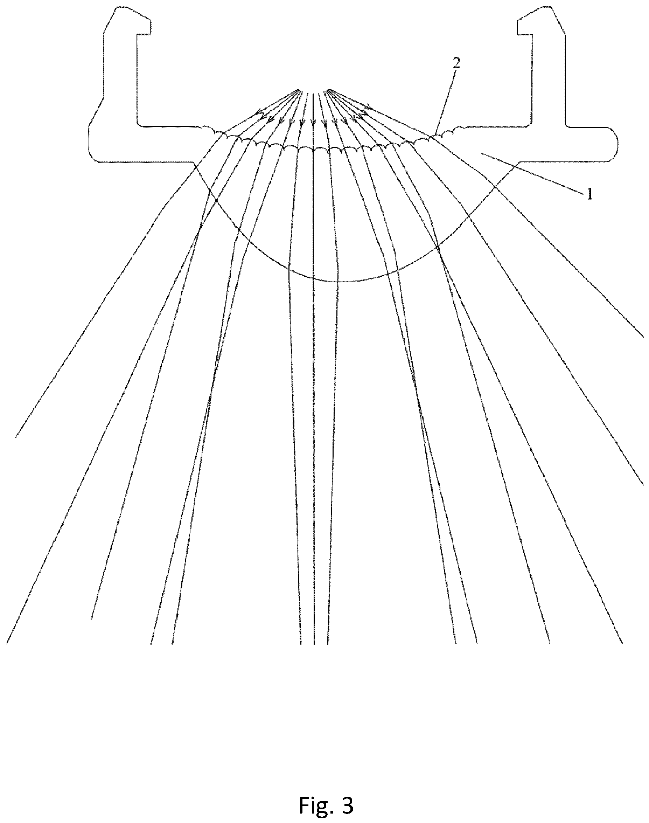

According to the above configuration, referring now to Fig. 3, when the light emitted from the LED light source irradiates the lens, the refractive paths of the light rays can be modified (changed) by the cylindrical lenses 2, facilitating light diffusion and mixing. More specifically, the blue light rays and yellow light rays are mixed much better, finally making the color temperature of the light emitted by the exit surface 12 more uniform, effectively eliminating the problem of yellow edges outlined above. It is to be understood that the above configuration does not result in a reduction in the light transmission of the lens because no light diffusing agent or frosting material is added to the transparent material of the lens.

Preferably, as shown in Fig. 2, the incident surface 11 is set to be concave to facilitate light diffusion and mixing. The exit surface 12 is set as a convex surface to achieve a light condensing effect and ensure a good the quality of light output.

In this embodiment, as shown in Fig. 2, the lens body 1 and the plurality of cylindrical lenses 2 are in an integral structure (integrally formed) to facilitate the use and ensure the stability of the light transmission effect. Preferably, the lens body 1 and the plurality of cylindrical lenses 2 are made of a transparent material with adequate characteristics of light refraction, and the light transmission effect is good. More specifically, the transparent material of the lens may be plastic or glass, which is not described herein in more detail because this is generally known from the prior art.

As regards the plurality of cylindrical lenses 2, as shown in Fig. 2, the arrangement is set as follows: along the arc (transverse) direction of the incident surface 11, a plurality of cylindrical lenses 2 are continuously arranged between the two ends of the incident surface 11, each cylindrical lens 2 extending in the longitudinal direction of the lens (perpendicular to the plane of the cross-sectional view of Fig. 2). Accordingly, it can be ensured that the cylindrical lens 2 basically covers the incident surface 11, the refraction path of more light rays is changed, and the effect of eliminating yellow edges is enhanced.

Preferably, referring to Fig. 2, the cylindrical lenses 2 are each provided in an arc-shaped (curved) cylindrical structure to make the incident light of the lens more uniform. More specifically, the cylindrical lenses 2 may each be set as a circular arc cylindrical structure, or as an elliptical arc cylindrical structure.

In other aspects, referring to Fig. 2, the two sides of the lens body 1 may also be extended to form connection bodies 3 extending from each side of the lens body 1. The connection bodies 3 enable the lens to be fixedly connected to a external mounting bracket 5, so that the lens can be mounted.

In this embodiment, the lens as a whole is set up as a strip lens to better avoid the appearance of yellow edges and ensure a high quality of light output. More specifically, the lens body 1 is configured as a long strip, that is, its length in the longitudinal direction (perpendicular to the plane of the cross-sectional view of Fig. 2) is much greater than its width (in the transverse x-direction of Fig. 2). The individual cylindrical lenses 2 are arranged to extend along the length (longitudinal direction) of the lens body 1, i.e. in a direction perpendicular to the plane of the cross-sectional view of Fig. 2.

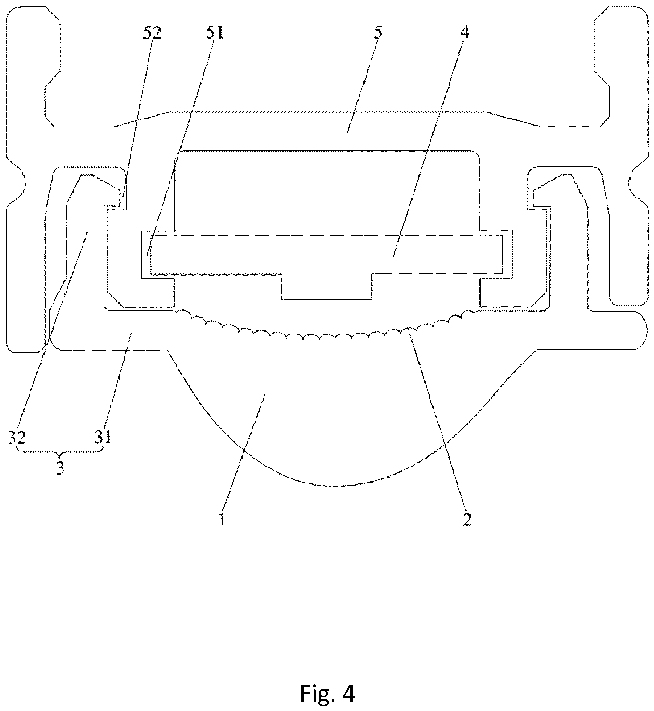

This embodiment also provides a lamp comprising a lens as described above. As shown in Fig. 4, the lamp also includes an LED light-emitting module 4 (i.e., the LED light source mentioned above), and the LED light-emitting module 4 is disposed at the light incident side of the lens, i.e., the LED light-emitting module 4 is disposed opposite to the light incident surface 11 of the lens. It can be understood that a certain distance should be set between the LED light-emitting module 4 and the cylindrical lens 2 to ensure a normal use of the LED light-emitting module 4 and in particular a certain spreading of the light emitted by the LED light-emitting module 4, as shown in Fig. 3, in particular so that the light emitted by the LED light-emitting module 4 basically uniformly irradiates the entire arc-shaped light incident surface of the lens.

According to the above arrangement, when the light emitted LED light-emitting module 4 passes through the lens to form a plurality of light spots at the light exit side of the lens, as shown in Fig. 3, the yellow edges of the light spots can be effectively eliminated to ensure a high quality of light output.

Further, as shown in Fig. 4, the lamp also includes a mounting bracket 5, and the lens 1 and LED light-emitting module 4 are both mounted to the same mounting bracket 5. In this embodiment, the mounting bracket 5 is made of aluminum, and is thus lightweight, has a reliable structure and facilitates heat dissipation. A mounting slot 51 is provided in the mounting bracket 5, and the LED light-emitting module 4 is accommodated in a positive-fit manner in the mounting slot 51, and the installation is very convenient.

In this embodiment, each of the lateral connection bodies 3 of the lens 1 also includes a first connecting arm 31 and a second connecting arm 32. Each of the first connecting arms 31 is extends from the lens body 1 laterally outwards and transversely, i.e. in the width direction of the lens. Each of the second connecting arm 32 is connected to the associated first connecting arm 31 at a first end thereof, and the other end of the second connecting arm 32 extends along the height direction of the lens (perpendicular to the width direction and in the plane of the drawings shown in Figs. 2 to 4) and comprises a snapping protrusion at an end thereof remote from the associated first connecting arm 31. A corresponding slot (clamping groove) 52 is formed on the mounting bracket 5, and the snapping protrusion at the end of the second connecting arm 32 extends into the corresponding slot (clamping groove) 52 of the mounting bracket 5 so as to grip behind a protrusion formed by the corresponding slot 52. As shown in Fig. 4, the snapping protrusion of the second connecting arm 32 is snap-fitted into the slot 52 of the mounting bracket 5, so that the connecting bodies 3 are firmly connected with the mounting bracket 5 to firmly connect the lens 1 with the mounting bracket 5, which is very convenient for disassembly and installation.

As shown in the cross-sectional view of Fig. 4, each mounting slot 51 of the mounting bracket is formed in a substantially C-shaped member (holding arm) protruding perpendicular to a base of the mounting bracket 5, towards the lens 1 to be mounted. An upper corner of each C-shaped member is beveled, substantially at an angle of 45 degrees. The base of the mounting bracket extends in lateral direction beyond each of the C-shaped members, where lateral legs protrude perpendicular to the base towards the lens 1 to be mounted to thereby form a slot (clamping groove) 52 of a width, which basically corresponds to the width of a second connecting arm 32 of the lens 1. As shown in Figs. 2 and 4, the upper end of each second arm 32 has a beveled front end, which is slanted inward at an angle that is smaller than the bevel angle of the upper corner of each C-shaped member (e.g. of the order of about 30 degrees).

As can be concluded from Fig. 4, the LED light-emitting module 4 (or the plurality of LED light-emitting modules 4) may be inserted into the mounting slot 51 of the bracket 5, e.g. by pushing it along a direction perpendicular to the plane of the drawing of Fig. 4. Mounting the LED light-emitting module 4 (or the plurality of LED light-emitting modules 4) to the mounting bracket 5 also defines the positions of the LEDs with respect to the final position of the lens 1. For mounting the lens 1 to the mounting bracket 5, the lens 1 is then moved from below towards the mounting bracket 5, until the upper front ends of the second connecting arms 32 enter the two lateral receptacles formed between the C-shaped members and the lateral legs. Finally, the bevel surface of each of the second connecting arms 32 contacts the bevel surface of the associated C-shaped members. Further pushing the lens 1 towards the mounting bracket 5 finally causes the two second connecting arms 32 to spread apart resiliently and slide further into the receptacles formed between the C-shaped members and the lateral legs. Finally, the snapping protrusions at the front ends of the resilient second connecting arms 32 flex back towards their relaxed home position shown in Fig. 4, so as to grip behind a protrusion formed by the corresponding slot 52. In this way, the lens 1 is fixedly mounted to the mounting bracket 5, with a predetermined distance being formed between the LEDs and the light incident surface of the lens 1. The rectangular volume on the rear side of the LED light-emitting module ('above') effectively enhances heat dissipation.

Of course, in other embodiments, the shape and configuration of both the connection body 3 and the mounting bracket 5 may be modified according to the actual needs, and the present embodiment is not limited to the afore-mentioned features.

In this embodiment, as regards the lamp as a whole, the lamp is preferably a strip-shaped lamp to better avoid the appearance of yellow edges, and to ensure the quality of lighting. More specifically, the strip-shaped lamp is positioned on a first side of the strip-shaped lens to emit light rays as schematically shown in Fig. 3. The LED light-emitting module 4 (or a plurality of LED light-emitting modules 4) is (are) thus arranged along the length direction of the lens, and the mounting frame 5 is configured as a strip-shaped frame, that is, its length is much greater than its width, in order to match the lens.

In summary, the present embodiment provides a lens and a lamp, wherein the incident surface 11 of the lens body 1 is shaped as a concave surface, and the plurality of cylindrical lenses 2 are continuously arranged on the incident side of the incident surface 11, so as to change the refractive path of the incident light, and the light refracted by the lens is diffused and mixed by the transparent material of the lens, so as to make the color temperature of the light emitted by the lens more uniform and effectively eliminate the phenomenon of yellow edges. At the same time, because no light diffusing agent is added and no abrasive material is added to the transparent material of the lens, the light transmittance of the lens is not reduced.

The above description is only a preferred embodiment of the present invention, and it should not be understood that the present invention is limited to the details of the embodiment and the range of applications, which can be changed by those skilled in the art according to the spirit of the present invention.

### List of Reference Numerals

- 1: lens body
- 2: cylindrical lens
- 3: connecting body
- 4: LED light-emitting module
- 5: mounting bracket

- 11: incident surface
- 12: exit surface

- 31: first connecting arm
- 32: second connecting arm

- 51: mounting slot
- 52: slot

- 100: LED chip
- 200: packaging layer

## Claims

1. A lens, in particular a lens for imaging light emitted by an LED light-emitting module (4), said lens comprising:
a lens body (1), wherein a light incident surface (11) is formed on a first side of the lens body (1) and a light exit surface (12) is formed on a second side of said lens body (1) opposite to the first side; and
a plurality of cylindrical lenses (2) arranged on a light incident side of the light incident surface (11) and forming a continuously arranged structure.

2. The lens as claimed in claim 1, wherein the light incident surface (11) of the lens body (1) is provided with a concave surface.

3. The lens as claimed in claim 2, wherein the plurality of cylindrical lenses (2) are continuously arranged between two opposite ends of the light incident surface (11) of the lens body (1) along the direction of an arc formed by said light incident surface (11).

4. The lens as claimed in any of the preceding claims, wherein the plurality of cylindrical lenses (2) are each provided as an arc-shaped cylindrical structure.

5. The lens as claimed in any of the preceding claims, wherein
said lens body (1) is integrally formed with the plurality of cylindrical lenses (2); and/or
the lens body (1) and the plurality of said cylindrical lenses (2) are made of a transparent material.

6. The lens as claimed in any of the preceding claims, wherein the light exit surface (12) of the lens body (1) is provided as a convex surface.

7. The lens as claimed in any of the preceding claims, wherein connecting bodies (3) extend laterally from side portions of the lens body (1), each connecting body (3) being an L-shaped member comprising a linear first connecting arm (31) extending laterally from a side portion of the lens body (1) and a linear second connecting arm (32) extending perpendicular to the first connecting arm (31) and in a direction opposite to the light exit surface (12) of the lens body (1).

8. The lens as claimed in claim 7, wherein snapping protrusions are formed at top ends of the second connecting arm (32), each snapping protrusion extending inward towards the opposite snapping protrusion.

9. The lens as claimed in any of the preceding claims, wherein the lens as a whole is provided as a strip-shaped lens.

10. A lamp, comprising a lens as claimed in any of the preceding claims.

11. The lamp as claimed in claim 10, wherein the lamp further comprises an LED light-emitting module (4), said LED light-emitting module (4) being arranged at the light entrance side of the lens.

12. The lens as claimed in claim 10 or 11, further comprising a mounting bracket (5) firmly connected to the lens by latching.

13. The lens as claimed in claim 12, wherein the mounting bracket (5) comprises two C-shaped holding arms protruding perpendicular to a base of the mounting bracket (5) and towards the lens body (1), wherein the two C-shaped holding arms together form a rectangular receptacle and mounting slots (51) are formed at inner sides of the two C-shaped holding arms so as to face each other, wherein the two mounting slots (51) are formed at the same distance to the base of the mounting bracket (5) and configured to accommodate a lateral edge of LED light-emitting module (4), to thereby firmly mount the LED light-emitting module (4) to the mounting bracket (5).

14. The lamp as claimed in any of claims 11 to 13, wherein the lamp as a whole is configured as a strip-shaped lamp.
